# FASCICULE DE BREVET EUROPEEN

(11) **EP 1 951 541 B1**
(45) Date de publication et mention de la délivrance du brevet: **05.08.2009**
(21) Numéro de dépôt: 06831005.1
(22) Date de dépôt: 20.10.2006
(51) Int. Cl.: B60K 37/06, B60K 35/00, B62D 1/04

(54) **DISPOSITIF DE COMMANDE AMELIORE ET VEHICULE COMPORTANT UN TEL DISPOSITIF**
VERBESSERTE STEUERVORRICHTUNG UND FAHRZEUG MIT EINER SOLCHEN VORRICHTUNG
IMPROVED CONTROL DEVICE AND VEHICLE COMPRISING ONE SUCH DEVICE

(30) Priorité: 20.10.2005 GB 0521334
(43) Date de publication de la demande: 06.08.2008
(73) Titulaire: Delphi Technologies, Inc., Troy, Michigan 48007 (US)
(72) Inventeur: TUPINIER, Laurent, F-67116 Reichstett (FR)
(74) Mandataire: Robert, Vincent
(86) Numéro de dépôt international: PCT/FR2006/002390
(87) Numéro de publication internationale: WO 2007/045774

(56) Documents cités:
- WO-A-00/37300
- DE-A1- 19 604 351
- DE-A1- 19 631 305
- DE-A1- 19 858 835

## Description

La présente invention se rapporte au domaine technique des dispositifs de commande de véhicules. En particulier, l'invention a trait aux commandes sous volant classiques pour activer / désactiver certaines fonctions du véhicule.

Les commandes sous volant comportent en général des moyens de commutation mécaniques. Ces derniers ne permettent de commander qu'un nombre limité de fonctionnalités d'un véhicule dans la mesure où l'espace disponible pour leur agencement est réduit au voisinage de la colonne de direction. Les moyens de commande ou de commutation comportent le plus souvent des systèmes à levier mécanique à bagues déplaçables dans diverses positions stables ou instables pour actionner des commutateurs électriques. On peut citer par exemple le levier de clignotant et le levier d'essuie-glaces d'un véhicule.

Ces leviers sont agencés au niveau du haut de la colonne de direction, au voisinage du volant, et permettent d'activer, désactiver et/ou de moduler diverses fonctionnalités, par déplacement selon au moins deux sens différenciés et par rotation des bagues.

Outre leur encombrement et la limitation du nombre des fonctions qu'elles impliquent, les liaisons mécaniques peuvent générer des problèmes de fiabilité dans la durée.

La présente invention vise à fournir un dispositif de commande des fonctionnalités d'un véhicule, disposé au voisinage de la colonne de direction, permettant d'augmenter le nombre de fonctionnalités, d'en réduire l'encombrement et d'en rendre aussi l'utilisation plus intuitive et donc plus simple.

A ces effets, le dispositif de commande de l'invention, présentant classiquement au moins un organe d'actionnement pour activer, désactiver et/ou moduler lesdites fonctionnalités, ledit organe d'actionnement étant déplaçable selon deux directions différenciées, comporte :
- des moyens de détection du déplacement de l'organe d'actionnement dans chacun des quatre sens correspondant aux deux directions,
- des moyens de traitement des informations issues des moyens de détection, pour identifier la fonctionnalité à commander et pour générer un signal électrique de pilotage correspondant, et
- des moyens d'affichage délivrant un retour d'information visuel sur la ou les fonctionnalité(s) activée(s) ou sur leur modulation.

Ces caractéristiques renvoient à un fonctionnement en joystick tel que décrit dans le même contexte dans le document DE 196 31 305, qui ne précise cependant pas le mode de traitement des déplacements de l'organe d'actionnement.

A cet effet, le dispositif de l'invention se caractérise à titre essentiel en ce que :
- des moyens de rappel ramènent l'organe d'actionnement dans une position stable de repos après actionnement par l'utilisateur,
- les impulsions dans une première direction permettent de sélectionner une fonctionnalité,
- les impulsions exercées dans la seconde direction permettent de moduler ou de désactiver la modulation de la fonctionnalité sélectionnée, et
- l'identification et la sélection de la fonctionnalité de sa modulation sont obtenues par l'intermédiaire d'un comptage des déplacements de l'organe d'actionnement dans chaque sens.

Les moyens de traitement analysent et gèrent les informations liées au nombre d'impulsions exercées dans un sens déterminé sur l'organe d'actionnement.

On peut de cette façon par exemple sélectionner dans la première direction les essuie-glaces avant, et piloter leur vitesse de balayage en exerçant une impulsion dans la seconde direction.

L'organe d'actionnement peut par exemple être constitué d'un levier associé à des moyens de détection constitués par quatre microswitches.

Selon une possibilité, le dispositif de l'invention comporte un organe d'actionnement de part et d'autre de la colonne de direction, au voisinage du volant.

Chaque organe d'actionnement est associé à des moyens d'affichage correspondant à des fonctions distinctes, par exemple des pictogrammes rétroéclairés.

L'un des sens de manipulation de chaque organe d'actionnement se voit de préférence attribuer exclusivement l'activation d'un indicateur de changement de direction du véhicule. L'utilisateur peut ainsi indiquer un changement de direction du véhicule indépendamment d'une éventuelle sélection qu'il est en train d'entreprendre avec l'organe d'actionnement.

Le dispositif de commande conforme à l'invention peut également comporter des moyens générant un retour d'information sonore en complément du retour d'information visuel délivré par le moyen d'affichage.

La présente invention concerne également un véhicule comportant un dispositif de commande tel que décrit ci-dessus.

D'autres caractéristiques et avantages ressortiront également de la description détaillée figurant ci-après en référence aux dessins annexés, dans lesquels :
- la figure 1 est une représentation d'un exemple d'agencement d'un dispositif de commande de l'invention sur le haut de colonne de direction d'un véhicule ;
- la figure 2 est un exemple de réalisation des moyens d'affichage du dispositif de commande conforme à l'invention, lesdits moyens d'affichage comportant des indicateurs lumineux correspondant à des fonctions distinctes pour chaque organe d'actionnement.

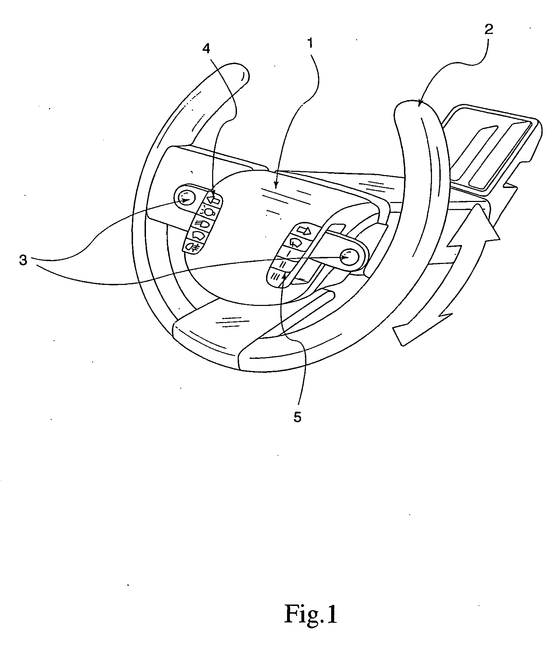

La figure 1 représente un exemple de réalisation et d'agencement d'un dispositif de commande conforme à l'invention sur le haut de colonne de direction (1) d'un véhicule. La colonne de direction est entraînée en rotation soit directement soit indirectement par l'intermédiaire d'un volant (2).

Selon un exemple de réalisation, le haut de la colonne de direction (1) peut rester fixe lors de la rotation du volant (2).

Le dispositif de commande représenté en figure 1 comporte deux organes d'actionnement (3) disposés de part et d'autre du haut de colonne de direction (1) au voisinage du volant (2). Chaque organe d'actionnement (3) est associé à des moyens d'affichage distincts (4) et (5).

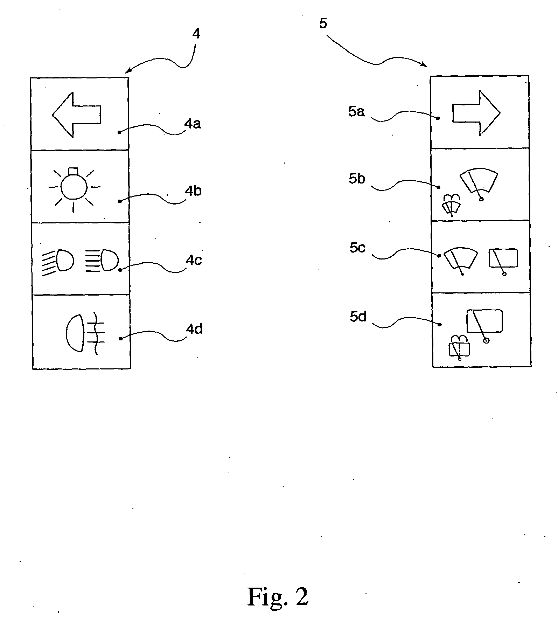

La figure 2 représente un exemple de réalisation des moyens d'affichage (4) et (5). Les moyens d'affichage (4) comportent par exemple quatre symboles distincts (4a, 4b, 4c, 4d) se rapportant chacun à une fonctionnalité déterminée du véhicule. Les autres moyen d'affichage (5) comportent quatre symboles complémentaires (5a, 5b, 5c, 5d) concernant d'autres fonctionnalités. Les symboles (4a, 4b, 4c, 4d) correspondent respectivement à l'indicateur de changement de direction gauche (4a), aux feux de position (4b), aux feux de route et de croisement (4c) et aux feux antibrouillard (4d). Chacune de ces fonctionnalités peut ainsi être sélectionnée par l'organe d'actionnement (3) situé du côté gauche du haut de la colonne de direction (1).

Dès que l'une de ces fonctionnalités est sélectionnée et/ou activée, un rétroéclairage illumine le symbole correspondant (4a, 4b, 4c ou 4d).

L'organe d'actionnement (3) situé du côté droit du haut de colonne de direction (1) permet par exemple d'activer et de désactiver les fonctionnalités repérées par des symboles correspondants, telles qu'un indicateur de changement de direction droit (5a), un essuie-glace et un lave-glace avant (5b), un essuie-glace et un lave-glace avant et arrière (5c), ou encore un essuie-glace et un lave-glace arrière (5d).

Le dispositif conforme à l'invention peut également commander d'autres fonctionnalités du véhicule non représentées du type climatisation, chauffage, ventilation, etc.

Selon une possibilité, chaque organe d'actionnement (3) peut être déplacé à partir d'une position de repos stable dans quatre positions instables, selon deux directions. Une fois l'impulsion donnée dans l'une des positions instables, l'organe d'actionnement (3) revient dans sa position de repos stable grâce à des moyens de rappel, matérialisés par exemple par l'effet ressort des microswitches qui réalisent en même temps la détection.

Chaque organe d'actionnement (3) se déplace par un double pivotement autour d'un axe orthogonal à l'axe de la colonne de direction et autour d'un axe sensiblement parallèle à l'axe de ladite colonne.

Déplacer l'organe d'actionnement (3) revient donc à exercer sur ledit organe d'actionnement (3) une impulsion du type poussée ou tirée, selon une direction sensiblement parallèle à l'axe de la colonne de direction ou à exercer une pression engendrant un léger pivotement dans le sens horaire ou anti-horaire.

Chaque déplacement de l'organe d'actionnement (3) dans un des sens possibles revient donc à exercer une impulsion sur ledit organe d'actionnement (3). Le système peut donc être actionné par les pouces d'un conducteur dont les mains manipulent le volant, ce qui accroît la sécurité de manipulation du système.

Le dispositif de commande de l'invention peut fonctionner soit dans un mode dit "mode de modulation", soit dans un mode dit "mode de sélection". Le mode de modulation correspond à un positionnement de chaque organe d'actionnement (3) dans une position de sélection stable.

Lorsque l'utilisateur conduisant le véhicule souhaite par exemple changer de direction, il exerce une poussée dans une direction déterminée sur l'organe d'actionnement droit ou gauche pour activer l'indicateur de changement de direction correspondant. Il est à noter que la désactivation de cet indicateur peut se faire par l'intermédiaire d'un signal issu d'un capteur d'angle associé au volant ou tout simplement par l'intermédiaire d'une poussée complémentaire exercée sur l'organe d'actionnement (3) dans la même direction ou dans une direction opposée.

Dans ce mode de modulation, pour peu que la sélection en ait été faite, l'utilisateur peut également actionner les appels de phares en exerçant une impulsion vers le haut sur l'organe d'actionnement gauche (3). Le même mouvement de l'organe d'actionnement (3) peut également servir à passer d'un éclairage en feux de croisement vers un éclairage en feux de route et inversement.

La gestion des commandes, par répétition d'un déplacement ou par inversion de son sens, est réalisée par l'unité de traitement des informations qui peut comporter à cet effet un microprocesseur ou un microcontrôleur.

Le mode de sélection correspond par exemple à un déplacement de l'organe d'actionnement (3) dans le plan du volant. Il est ainsi possible de sélectionner les diverses fonctionnalités affichées. Les moyens d'affichage comportent une juxtaposition de voyants lumineux dotés de pictogrammes, lesquels sont éclairés successivement par une impulsion de sélection sur l'organe d'actionnement (3). Un voyant éclairé traduit la sélection de la fonctionnalité ou de l'ensemble de fonctionnalités qui lui est (sont) associée(s).

Une fois sélectionnée, cette fonctionnalité est identifiée par l'utilisateur et par le moyen de traitement. L'utilisateur peut ensuite activer/désactiver ou moduler ladite fonctionnalité en utilisant le mode complémentaire de modulation, dans la seconde direction.

Le système fonctionne en fait comme un menu déroulant, avec une arborescence permettant de choisir des sous-sélections (mode de modulation) après que les sélections principales (mode sélection) ait été effectuées.

Le dispositif de commande conforme à l'invention permet également de piloter d'autres fonctionnalités non décrites en détail.

## Revendications

1. Dispositif de commande des fonctionnalités d'un véhicule, agencé sur le haut d'une colonne de direction (1), au voisinage d'un volant (2), comportant au moins un organe d'actionnement (3) pour activer, désactiver et/ou moduler lesdites fonctionnalités, ledit organe d'actionnement (3) étant déplaçable selon deux directions différenciées, et comportant :
- des moyens de détection du déplacement de l'organe d'actionnement (3) dans chacun des quatre sens correspondant aux deux directions,
- des moyens de traitement des informations issues des moyens de détection, pour identifier la fonctionnalité à commander et pour générer un signal électrique de pilotage correspondant, et
- des moyens d'affichage (4, 5) délivrant un retour d'information visuel sur la ou les fonctionnalité(s) activée(s) ou sur leur modulation,
**caractérisé en ce que :**
- des moyens de rappel ramènent l'organe d'actionnement dans une position stable de repos après actionnement par l'utilisateur,
- les déplacements dans une première direction permettent de sélectionner une fonctionnalité,
- les déplacements dans l'autre direction permettent de moduler ou de désactiver la modulation de la fonctionnalité sélectionnée, et
- l'identification et la sélection de ladite fonctionnalité et sa modulation sont obtenues par comptage des déplacements de l'organe d'actionnement (3) dans chaque sens.

2. Dispositif selon la revendication 1, **caractérisé en ce que** l'organe d'actionnement est un levier (3).

3. Dispositif selon la revendication précédente, **caractérisé en ce que** les moyens de détection comportent quatre microswitches, actionnés par le levier (3).

4. Dispositif selon l'une quelconque des revendications 1 à 3, **caractérisé en ce qu'**il comporte un organe d'actionnement (3) de part et d'autre du haut de la colonne de direction (1), au voisinage du volant (2).

5. Dispositif selon la revendication 4, **caractérisé en ce que** chaque organe d'actionnement (3) est associé à des moyens d'affichage (4, 5) correspondant à des fonctions distinctes.

6. Dispositif selon la revendication précédente, **caractérisé en ce que** les moyens d'affichage (4, 5) sont des pictogrammes (4a, 4b, 4c 4d ; 5a, 5b, 5c, 5d) bénéficiant d'un rétroéclairage.

7. Dispositif selon l'une quelconque des revendications 4 à 6, **caractérisé en ce que** chaque organe d'actionnement (3) comporte un sens de manipulation réservé à un indicateur de changement de direction du véhicule.

8. Dispositif selon l'une quelconque des revendications précédentes, **caractérisé en ce qu'**il comporte des moyens générant un retour d'information sonore en complément du retour d'information visuel délivré par les moyens d'affichage (4, 5).

9. Véhicule comportant un dispositif de commande conforme à l'une quelconque des revendications 1 à 8.

## Claims

1. Device for controlling the functionalities of a vehicle, arranged on the top of a steering column (1), in the vicinity of a steering-wheel (2), including at least one actuation organ (3) to activate, deactivate and/or modulate the said functionalities, the said actuation organ (3) being displaceable in two different directions, and including:
- means for detection of the displacement of the actuation organ (3) in each or the four directions corresponding to the two directions,
- means for processing information from the detection means, to identify the functionality to be controlled and to generate a corresponding electrical control signal, and
- display means (4, 5) providing a feedback of visual information about the functionality or functionalities activated or about their modulation,
**characterised by** the fact that:
- return means return the actuation organ to a stable rest position after actuation by the user,
- the displacements in a first direction allow selection of a functionality,
- the displacements in the other direction permit modulation or deactivation of the modulation of the selected functionality, and
- identification and selection of the said functionality and its modulation are obtained by counting the displacements of the actuation organ (3) in each direction.

2. Device as described in claim 1, **characterised by** the fact that the actuation organs is a lever (3).

3. Device as described in the preceding claim, **characterised by** the fact that the detection means include four micro-switches, actuated by the lever (3).

4. Device as described in any one of claims 1 to 3, **characterised by** the fact that it includes an actuation organ (3) on each side of the top of the steering column (1), in the vicinity of the steering-wheel (2).

5. Device as described in claim 4, **characterised by** the fact that each actuation organ (3) is associated with display means (4, 5) corresponding to distinct functions.

6. Device as described in the preceding claim, **characterised by** the fact that the display means (4, 5) are back-lit pictograms (4a, 4b, 4c, 4d; 5a, 5b, 5c, 5d).

7. Device as described in any one of claims 4 to 6, **characterised by** the fact that each actuation organ (3) includes a manipulation direction reserved for an indicator of change of direction of the vehicle.

8. Device as described in any one of the preceding claims, **characterised by** the fact that it includes means generating an audible feedback of information complementing the visual feedback of information provided by the display means (4, 5).

9. Vehicle including a control device as described in any one of claims 1 to 8.

## Patentansprüche

1. Vorrichtung zur Steuerung der Funktionen eines Fahrzeugs, die am oberen Teil einer Lenksäule (1) in Nähe eines Lenkrads (2) angeordnet ist und mindestens ein Betätigungsorgan (3) zum Aktivieren, Deaktivieren und/oder Modulieren der Funktionen umfasst, wobei das Betätigungsorgan (3) in zwei differenzierten Richtungen beweglich ist und umfasst:
- Mittel zum Erfassen der Bewegung des Betätigungsorgans in jedem der vier den beiden Richtungen entsprechenden Sinne,
- Mittel zur Verarbeitung der von den Erfassungsmitteln kommenden Informationen, um die zu steuernde Funktion zu identifizieren und um ein entsprechendes elektrisches Steuersignal zu erzeugen, und
- Anzeigemittel (4, 5) die eine visuelle Informationsrückmeldung über die aktivierte(n) Funktion(en) oder über ihre Modulation liefern,
**dadurch gekennzeichnet, dass:**
- Rückholmittel das Betätigungsorgan nach Betätigung durch den Benutzer in eine stabile Ruhestellung zurückbringen,
- die Bewegungen in einer ersten Richtung die Wahl einer Funktion gestatten,
- die Bewegungen in der anderen Richtung die Modulierung oder Deaktivierung der Modulation der gewählten Funktion gestatten und
- die Identifizierung und die Wahl der Funktion und ihre Modulation durch Zählen der Bewegungen des Betätigungsorgans (3) in jedem Sinn erhalten werden.

2. Vorrichtung nach Anspruch 1, **dadurch gekennzeichnet, dass** das Betätigungsorgan ein Hebel (3) ist.

3. Vorrichtung nach dem vorhergehenden Anspruch, **dadurch gekennzeichnet, dass** die Erfassungsmittel vier Mikroschalter umfassen, die durch den Hebel (3) betätigt werden.

4. Vorrichtung nach einem der Ansprüche 1 bis 3, **dadurch gekennzeichnet, dass** sie ein Betätigungsorgan (3) auf jeder Seite des oberen Teils der Lenksäule
(1) in Nähe des Lenkrads (2) umfasst.

5. Vorrichtung nach Anspruch 4, **dadurch gekennzeichnet, dass** jedem Betätigungsorgan (3) Anzeigemittel (4, 5) zugeordnet sind, die verschiedenen Funktionen entsprechen.

6. Vorrichtung nach dem vorhergehenden Anspruch, **dadurch gekennzeichnet, dass** die Anzeigemittel (4, 5) Piktogramme (4a, 4b, 4c, 4d; 5a, 5b, 5c, 5d) mit Hintergrundbeleuchtung sind.

7. Vorrichtung nach einem der Ansprüche 4 bis 6, **dadurch gekennzeichnet, dass** jedes Betätigungsorgan (3) einen Manipulationssinn umfasst, der einem Fahrtrichtungsanzeiger des Fahrzeugs vorbehalten ist.

8. Vorrichtung nach einem der vorhergehenden Ansprüche, **dadurch gekennzeichnet, dass** sie Mittel umfasst, die zur Ergänzung der von den Anzeigemitteln (4, 5) gelieferten Informationsrückmeldung eine akustische Informationsrückmeldung erzeugen.

9. Fahrzeug, umfassend eine Steuervorrichtung nach einem der Ansprüche 1 bis 8.
